(19) Europäisches Patentamt
European Patent Office
Office européen des brevets

(11) EP 0 726 283 B1

(12) FASCICULE DE BREVET EUROPEEN

(45) Date de publication et mention de la délivrance du brevet:
**11.07.2001 Bulletin 2001/28**

(51) Int Cl.[7]: **C08G 18/67**, C08G 18/68

(21) Numéro de dépôt: **96400220.8**

(22) Date de dépôt: **31.01.1996**

# (54) Résine pour préimprégné à renfort orienté, formable et produits moulés obtenus

Harz für formbares Prepreg mit orientierter Verstärkung und damit erhaltenes geformtes Produkt

Resin for formable prepreg with oriented reinforcement and moulded product obtained

(84) Etats contractants désignés:
**AT CH DE DK ES FR IT LI SE**
Etats d'extension désignés:
**SI**

(30) Priorité: **07.02.1995 FR 9501485**

(43) Date de publication de la demande:
**14.08.1996 Bulletin 1996/33**

(73) Titulaire: **CRAY VALLEY SA**
**92800 Puteaux (FR)**

(72) Inventeurs:
- **Yang, Yeong-Show**
  **Witney, Oxon OX8 5YH (GB)**
- **Lequeux, Serge**
  **F-60550 Verneuil en Halatte (FR)**
- **Porato, Francette**
  **F-60530 Le Mesnil en Thelle (FR)**

(74) Mandataire: **Jolly, Jean-Pierre et al**
**Cabinet Jolly**
**54, rue de Clichy**
**75009 Paris (FR)**

(56) Documents cités:
**EP-A- 0 007 778** **EP-A- 0 391 668**
**GB-A- 1 162 724**

- **DATABASE WPI Section Ch, Week 9324 Derwent Publications Ltd., London, GB; Class A23, AN 93-191539 XP002003101 & JP-A-05 117 347 (DAINIPPON INK & CHEM KK) , 14 Mai 1993**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 726 283 B1

Printed by Jouve, 75001 PARIS (FR)

## Description

La présente invention se rapporte à une résine destinée, notamment, à la fabrication de préimprégnés à renfort orienté ayant une aptitude au formage à des matériaux à renfort orienté et à leurs applications dans les domaines des loisirs, de la construction navale, aéronautique et automobile et de l'industrie électrique et électronique.

On connaît déjà, notamment pour la fabrication de pièces de grandes dimensions à bonne tenue mécanique, des préimprégnés de résine polyester insaturé sous forme de feuilles relativement rigides d'épaisseur allant jusqu'à 1 cm environ. Ils sont obtenus en imprégnant des fibres de verre longues (c'est-à-dire de longueur au moins égale à 25 mm environ) au moyen d'une pâte de faible viscosité comprenant la résine polyester insaturé, un initiateur de radicaux libres, un agent compensateur de retrait, un agent de mûrissement (tel que la magnésie), un agent de démoulage, un monomère éthyléniquement insaturé, une charge minérale et le cas échéant une pâte pigmentaire, puis en laissant la viscosité augmenter au cours d'une phase dite de mûrissement.

On connaît par ailleurs, notamment par les brevets US-A-4.107.101, US-A-4.280.979, US-A-4.880.872, FR-A-2 667 602 et WO94/00503 diverses résines hybrides polyester-polyuréthanes.

Pour les besoins de diverses applications dans les domaines des loisirs, de la construction navale, aéronautique et automobile et de l'industrie électrique et électronique, (notamment pour les circuits imprimés) on est actuellement à la recherche de préimprégnés à renfort orienté possédant simultanément un ensemble de propriétés favorables telles que :

- bon mouillage du renfort orienté (tel que fibre, tissu, ou mat de verre, de carbone ou organique) par la résine synthétique,
- manipulabilité du préimprégné (c'est-à-dire rigidité suffisante et absence de caractère collant) après un temps aussi court que possible,
- stabilité du préimprégné (c'est-à-dire moulabilité), après stockage à une température de -18°C à 30°C, pendant une durée aussi longue que possible,
- température et durée de moulage aussi faibles que possible,
- bonne adhésion du préimprégné avec des matériaux aussi variés que les métaux (en particulier le cuivre, l'acier et l'aluminium), les polymères thermoplastiques (tels que notamment le polyéthylène, le polypropylène, les polyamides) et les polyuréthanes (par exemple en forme de mousse),
- propriétés mécaniques (notamment résistances à la traction, à la flexion, à la compression et au choc, limite élastique) aussi élevées que possible aussi bien à température ambiante (jusqu'à 40°C) qu'à froid (jusqu'à -40°C).

Ces différentes exigences se traduisent, au niveau de la résine synthétique imprégnant le renfort orienté, par la nécessité d'une durée de vie en pot ("pot life") à température ambiante (23°C), ou stabilité avant utilisation, au moins égale à 30 minutes et de préférence au moins égale à 45 minutes pour effectuer l'imprégnation du renfort orienté.

D'autre part on connaît (cf. "Les applications industrielles des matériaux composites", de Philippe COGNARD, Editions du Moniteur, Paris, 1989, Vol. I, pages 400 à 401 et 428 à 429), dans la fabrication de certains produits de hautes performances destinés aux domaines des loisirs, de la construction navale, aéronautique et automobile et de l'industrie électrique et électronique, les hautes performances de ces produits étant atteintes par la juxtaposition de plusieurs (parfois jusqu'à 5) matériaux de natures différentes, dont un matériau préimprégné à renfort orienté, un procédé de fabrication consistant à assembler les différents matériaux -à l'exception de la résine- dans un moule puis à injecter la résine dans le moule tout en procédant au moulage du produit par élévation de la température du moule jusqu'à ce que la résine durcisse suffisamment pour lier les renforts orientés et assurer l'adhésion du matériau à renfort orienté aux autres matériaux constitutifs du produit. Ce procédé permet de garantir des niveaux élevés de performances des produits ainsi obtenus, notamment des propriétés mécaniques élevées à température ambiante et à froid. Toutefois il présente l'inconvénient d'exiger une durée de moulage relativement longue, par exemple de l'ordre de 20 minutes autour de 100°C (cas de l'industrie électronique) ou bien un cycle de plusieurs heures en augmentant la température de moulage de 120° à 180°C (cas de l'industrie automobile). Cet inconvénient nuit à la productivité de fabrication de ces produits et explique par conséquent le niveau élevé de leur prix de revient. Pour les besoins des produits de hautes performances destinés aux domaines des loisirs, de la construction navale, aéronautique et automobile et de l'industrie électrique et électronique, les hautes performances de ces produits étant atteintes par la juxtaposition de plusieurs (parfois jusqu'à 5) matériaux de natures différentes, dont un matériau préimprégné de résine à renfort orienté, on est donc à la recherche d'un procédé de fabrication permettant de maintenir des niveaux élevés de performances tout en raccourcissant de manière significative la durée de moulage des matériaux.
La possibilité d'atteindre cet objectif de procédé dépend bien évidemment du nombre et de la nature des matériaux constitutifs de ces produits mais surtout de la capacité à trouver une résine répondant à l'ensemble des propriétés énumérées précédemment et capable notamment de durcir (réticuler) pendant un processus de moulage dans un temps très court.

La demande de brevet européen n° 0 391 668 concerne un matériau moulable qui est un mélange de

- un composé (A) à hydrogène actif obtenu par mélange d'un polyester insaturé (a), d'un ester époxy insaturé (a2) et d'un composé acrylique (a3) ayant un groupe acryloyle et un groupe hydroxyle dans la molécule,
- et d'un monomère vinyle (B) polymérisable, contenant de 5 à 40% en poids de méthacrylate de méthyle.

La demande de brevet japonais n° JP-A-5117347 a trait à une composition de résine polyester uréthane acrylate comprenant un monomère polymérisable et un polyester uréthane acrylate obtenue par utilisation d'un polyester lui-même obtenu en utilisant l'acide trifonctionnel spécifique qui est l'acide 4-carboxy-1, 8-octane dioïque.

La demande internationale publiée sous le numéro WO 94/09049 se rapporte à des compositions moulable en feuilles comprenant des charges minérales en poudre, des fibres de verre longues, un monomère éthyléniquement insaturé et une phase polymère durcissable qui est le produit de réaction d'au moins une résine polyester insaturée, d'au moins un polyisocyanate organique et d'au moins un (alk)acrylate hydroxylé. La résine polyester insaturée est un polyester polyol de fonctionnalité en groupement hydroxyle au moins égale à 1,5 obtenue par polycondensation d'acides ou anhydrides polycarboxyliques $\alpha,\beta$ éthyléniquement insaturés et de diols aliphatiques saturés, et le polyisocyanate organique est un diisocyanate.

La présente invention a pour objectif de répondre aux besoins exprimés dans le domaine des préimprégnés à renfort orienté et dans la fabrication de produits composites de hautes performances.

Un premier objet de la présente invention est donc une résine pouvant servir à la fabrication d'un produit composite et qui est donc capable de préimprégner un matériau à renfort orienté et de durcir , de préférence à une température de 80°C à 150°C pendant une durée de 30 secondes à 6 minutes, pour lier les renforts orientés et assurer l'adhésion du matériau à renfort orienté aux autres matériaux constitutifs du produit composite. Pour remplir la condition d'un bon mouillage du renfort orienté, la résine doit de préférence avoir une viscosité ne dépassant pas 10 Pa.s à la température choisie pour l'imprégnation.

A cet effet, l'invention a pour objet une résine polyester-polyuréthane modifiée, telle que définie dans la revendication 1 ci-après.

L'invention a également pour objet un matériau à renfort orienté préimprégné de résine tel que défini dans la revendication 3 ci-après.

L'invention a enfin pour objet un procédé de préparation d'un tel matériau tel que défini à la revendication 6 ci-après.

La résine selon l'invention, telle que définie ci-dessus, présente le plus souvent une température de transition vitreuse allant de 100° à 160°C.

La résine selon l'invention convient au procédé de fabrication d'un produit composite comprenant la juxtaposition de plusieurs matériaux de natures différentes dont un matériau à renfort orienté préimprégné de résine, une étape de moulage à température élevée pendant une durée suffisante pour que la résine durcie par l'élévation de température lie les renforts orientés et assure l'adhésion du matériau à renfort orienté aux autres matériaux constitutifs du produit composite, et dans lequel tous les matériaux constitutifs, y compris la résine, sont assemblés simultanément avant l'élévation de température de l'étape de moulage, c'est-à-dire sans que la résine soit injectée séparément après l'assemblage des autres matériaux dans le moule. Le moulage est de préférence effectué à une température de 80°C à 150°C, plus préférentiellement encore de 80° à 120°C, et/ou pendant une durée de 30 secondes à 6 minutes. Les autres matériaux associés au matériau à renfort orienté préimprégné de résine dans le produit composite peuvent être choisis notamment parmi les métaux (acier, cuivre, aluminium), les polymères thermoplastiques (polyéthylène, polypropylène, polyamides) et les polyuréthanes.

Facultativement, le premier composant peut comprendre, outre le(s) polyisocyanate(s) (A) et le(s) péroxyde(s) (B), au moins un monomère éthyléniquement insaturé, identique à ou différent de celui présent dans le second composant mais de préférence miscible avec celui-ci.

Par monomère éthyléniquement insaturé (b), au sens de la présente invention, on entend un monomère susceptible de copolymériser, dans certaines conditions, avec le polyester polyol (a), afin de générer une structure réticulée. Ce monomère peut être choisi parmi le styrène, les styrènes substitués comme le vinyltoluène, le tertio-butyl-styrène, l'alphaméthylstryrène, le chlorostyrène, le dichlorostyrène, le fumarate et le maléate de dibutyle, le fumarate et le maléate de diéthyle, le fumarate et le maléate de diméthyle, la N-vinylpyrrolidone, le méthacrylate d'allyle, l'acétate d'allyle, le succinate de diallyle, le N-vinylcarbazole, les esters d'alkyle inférieur ($C_1$ à $C_8$) d'acide acrylique et d'acide méthacrylique, les acrylates et méthacrylates cycliques, comme ceux de cyclohexyle et de benzyle, les méthacrylates et acrylates bi-cycliques comme ceux d'isobornyle, le phtalate de diallyle, le maléate de diallyle, le fumarate de diallyle, le cyanurate de triallyle, l'acétate, le crotonate et le propionate de vinyle, le divinylether, les diènes conjugués tels que le butadiène-1,3, l'isoprène, le 1,3-pentadiène, le 1,4-pentadiène, le 1,4-hexadiène, le 1,5-hexadiène, le 1-9-décadiène, le 5-méthylène-2-norbornène, le 5-vinyl-2-norbornène, les 2-alkyl-2,5-norbornadiènes, le 5-éthylidène-2-norbornène, le 5-(2-propenyl)-2-norbornène, le 5-(5-hexenyl)-2-norbornène, le 1,5-cyclooctadiène, le bicyclo [2,2,2] octa-2,5-diène, le cyclopentadiène, le 4,7,8,9-tétrahydroindène et l'isopropylidène tétrahydroindène, et les nitriles insaturés tels que l'acrylonitrile et le méthacrylonitrile ainsi que les

(méth)acrylates de polyol comme les diacrylates et diméthacrylates de l'éthylèneglycol, du propylèneglycol, du 1,3-butanediol, du 1,4-butanediol, du 1,6-hexanediol, du néopentyl-glycol, du 1,4-cyclo-hexane-diol, du 1,4-cyclo-hexane-diméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylèneglycol, du tétrapropylèneglycol, du triméthyloléthane, du triméthylolpropane, du glycérol, du penta-érythritol, les triacrylates et triméthacrylates du triméthyloléthane, du triméthylolpropane, du glycérol, du pentaérythritol, les tétraacrylates et tétraméthacrylates du pentaérythritol, les di(meth)acrylates à hexa(meth)acrylates du dipentaérythritol, les poly (méth)acrylates de polyols mono- ou polyéthoxylés ou mono- ou polyproxylés tels que le triacrylate et le triméthacrylate du triméthylol-propane triéthoxylé, du triméthylolpropane tripropoxylé, le triacrylate et le triméthacrylate du glycérol tripropoxylé, le triacrylate, le triméthacrylate, le tétraacrylate et le tétraméthacrylate du pentaérythritol tétraéthoxylé, et leurs mélanges en toutes proportions.

Les polyesters polyols (a) sont bien connus et sont préparés par réaction d'acides polycarboxyliques ou leurs anhydrides avec des alcools polyhydriques. Ils sont principalement linéaires et possèdent un poids moléculaire généralement compris entre 400 et 4 000. Ils peuvent également posséder des chaînes latérales lorsqu'on emploie des polyols ou des acides polycarboxyliques ayant plus de deux groupes fonctionnels. On préfère généralement les préparer à partir d'acides dicarboxyliques à insaturation $\alpha,\beta$-éthylénique tels que maléique, fumarique, citraconique, métaconique, itaconique, tétraconique ou similaires ou, lorsqu'ils existent, à partir des anhydrides correspondants tels que l'anhydride maléique.

On peut également préparer les polyesters polyols (a) utilisés dans la résine selon l'invention en remplaçant partiellement ces acides dicarboxyliques à insaturation $\alpha,\beta$-éthylénique par un ou des acides polycarboxyliques saturés tels que les acides orthophtalique, isophtalique, téréphtalique, succinique, méthylsuccinique, adipique, sébacique, tétrabromophtalique, hexachloro-endométhylène tétrahydrophtalique, tétrachlorophtalique, glutarique, pimélique ou similaires ou, lorsqu'ils existent, les anhydrides correspondants. De préférence le remplacement peut aller jusqu'à 45 % en moles.

Parmi les alcools polyhydriques utilisés pour la préparation de ces polyesters polyols (a) on préfère généralement les diols aliphatiques saturés tels que l'éthylène glycol, le propylène glycol, le butylène glycol, le diéthylène glycol, le dipropylène glycol, le triéthylène glycol, le tétraéthylène glycol, le butanediol, le pentanediol, l'hexanediol, le dibromonéopentylglycol, le 2-méthyl-1,3 propanediol et le néopentylglycol. Le bisphénol A et ses dérivés alcoxylés, ainsi que d'autres polyols aromatiques peuvent également être utilisés. Afin d'obtenir un compromis satisfaisant entre la réactivité du système, la résistance au choc de la résine et sa température de transition vitreuse, on préfère utiliser un mélange de néopentylglycol, de propylène glycol et de diétylèneglycol.

La préparation du polyester polyol (a) peut être effectuée en présence d'une quantité efficace d'au moins un inhibiteur de réticulation. Comme exemples d'inhibiteurs de réticulation utilisables, on peut citer notamment la phénothiazine, l'éther méthylique de l'hydroquinone, la N-N-diéthyl-hydroxyamine, le nitrobenzène, le di-tertiobutylcatéchol, l'hydroquinone, le p-anilinophénol, le phosphite de di-(2-éthylhexyl)-octylphényle, le 2,5-ditertiobutyl-4-hydroxy-toluène, le bleu de méthylène et leurs mélanges en toutes proportions. Une quantité efficace d'inhibiteur de réticulation est généralement comprise entre 0,01 % et 0,2 % en poids de polyester polyol (a).

Les polyesters polyols (a) utilisables dans la présente invention possèdent un indice d'alcool compris entre 100 et 300 et un indice d'acide ne dépassant pas 10, de préférence ne dépassant pas 5. Leur teneur en eau ne doit pas être supérieure à 5 000 ppm, de préférence pas supérieure à 2 000 ppm, et encore plus particulièrement pas supérieure à 800 ppm.

Le polyisocyanate (A) utilisé dans la présente invention possède une fonctionnalité au moins égale à 2 et au plus égale à 3. Il peut être aliphatique, cycloaliphatique et/ou aromatique et choisi parmi notamment les 4,4'-diphénylméthane diisocyanate, 2,4- et 2,6-toluènediisocyanate, isophorone diisocyanate, tétra-méthylène diisocyanate, pentaméthylène diisocyanate, 4,4'-dicyclohexylméthane diisocyanate, 2,2,4-triméthylhexa-méthylène-1,6-diisocyanate, triphénylméthane-4, 4,4"-triisocyanate, polyméthylène poly-phénylisocyanate, m-phénylène diisocyanate, p-phénylène diisocyanate, 1,5-naphtalène diisocyanate, naphtalène-1,4-diisocyanate, diphénylène-4,4'-diisocyanate, 3,3'-bi-tolylène-4,4'-diisocyanate, 1,4-cyclohexylène diméthylène diisocyanate, xylylène-1,4-diisocyanate, xylylène-1,3-diisocyanate, cyclohexyl-1,4-diisocyanate et 3,3' diméthyldiphénylméthane-4,4'-diisocyanate. Il peut aussi être utilisé sous forme de prépolymère du type polyurée ou polyuréthane de faible poids moléculaire, c'est-à-dire en faisant réagir l'un des polyisocyanates désignés ci-dessus avec une polyamine ou un polyol de faible poids moléculaire. Dans ce dernier cas on préfère utiliser un alkylène glycol tel que le dipropylène glycol, le tripropylène glycol, le diéthylène glycol, le triéthylène glycol, le tétraéthylèneglycol, le néopentylglycol, les 1,2 et 1,3-butylène glycols et le triméthylolpropane. Dans la présente invention, le polyisocyanate (A) peut encore être utilisé sous la forme d'urétonimine en chauffant l'un des polyisocyanates désignés ci-dessus à température élevée en présence d'un catalyseur phosphoré de manière à former un polycarbodiimide puis en faisant réagir ce dernier avec un autre groupe isocyanate, par exemple comme décrit dans le brevet US-A-4 014 935.

Le péroxyde ou mélange de peroxydes (B) est de préférence un péroxyde organique tel que le péroxyde de benzoyle, le 2,5-diméthyl-2,5-bis (2-éthylhexolpéroxy) hexane ou le péroxyde de méthyléthylcétone, un péroxydicarbonate, un péroxyester tel que le péroxybenzoate de tertiobutyle, le péroxyoctoacte de tertiobutyle, le péroxyoctoate de tertioamyle ou le 2,5-dipéroxyoctoate, ou encore le péroxyde de 2,4-pentanedione. La proportion du péroxyde ou mélange de péroxydes (B) est de préférence telle que $\frac{(B)}{(A) + (B)}$ soit de 1 à 2 % en poids.

Le péroxyde préféré selon l'invention est le péroxyde de benzoyle utilisé seul ou bien en mélange avec une proportion minoritaire de péroxy-2 éthylhexanoate de tertiobutyle.

Comme promoteur (c), utilisé de préférence en proportion comprise entre 0,3 % % et 1,5 % en poids, on peut citer notamment des solutions, dans un solvant organique tel que le dioctylphtalate, de sels minéraux ou organiques de métal de transition tel que vanadium, chrome, manganèse, fer, cobalt, nickel, cuivre, zinc, molybdène et plomb, ou encore des amines tertiaires telles que la diméthylaniline ou la N,N-diméthylparatoluidine.

Lorsque le peroxyde (B) est le péroxyde de benzoyle, on préfère utiliser une amine tertiaire comme promoteur. Lorsque le péroxyde (B) est le péroxyde de méthyléthylcétone, on préfère utiliser comme promoteur un sel tel que le naphténate ou l'octoate de cobalt.

Comme catalyseur de réaction (d) des fonctions isocyanates avec les fonctions alcools du polyester polyol (a) on peut citer :

- des amines tertiaires telles que le bis (diméthylaminoéthyl) éther, la triméthylamine, la triéthylamine, la N-méthylmorpholine, la N-éthylmorpholine, la N, N-diméthylbenzylamine, la N,N-diméthyléthanolamine, la N,N,N',N'-tétraméthyl-1,3-butanediamine, la triéthylanolamine, le 1,4 diazabicyclo [2,2,2] octane et l'oxyde de pyridine,
- des phosphines tertiaires telles que les trialkylphosphines et les dialkylbenzylphosphines,
- des bases fortes telles que les hydroxydes, alcoolates et phénolates de métaux alcalins et alcalino-terreux,
- des sels métalliques d'acides forts tels que les chlorures ferrique, stannique, stanneux et de bismuth, le trichlorure d'antimoine et le nitrate de bismuth,
- des chélates tels que ceux pouvant être obtenus à partir d'acétylacétone, de benzoylacétone, de trifluoroacétylacétone, d'acétoacétate d'éthyle, de salicylaldéhyde, de cyclopentanone-2-carboxylate, d'acétylacétoimine, de bis-acétylacétonealkylènediimines, de salicylaldéhydeimine et à partir de métaux tels que le béryllium, le magnésium, le zinc, le cadmium, le plomb, le titane, le zirconium, l'étain, l'arsenic, le bismuth, le chrome, le molybdène, le manganèse, le fer, le cobalt et le nickel,
- les alcoolates et phénolates de métaux tels que Ti $(OR)_4$, $Sn(OR)_4$, $Sn(OR)_2$ et $Al(OR)_3$ dans lesquels R est un groupe alkyle ou aryle,
- des sels d'acides organiques et des métaux tels que les alcalins et alcalino-terreux, l'aluminium, l'étain, le plomb, le manganèse, le cobalt, le nickel et le cuivre, par exemple l'acétate de sodium, le laurate de potassium, l'hexanoate de calcium, les acétate, octoate et oléate stanneux, l'octoate de plomb, les naphténates de manganèse et de cobalt, et
- les métaux carbonyles du fer et du cobalt et les dérivés organométalliques de l'étain tétravalent, de l'arsenic trivalent et pentavalent, de l'antimoine et du bismuth ; parmi ces dérivés on préfère plus particulièrement les sels de dialkylétain d'acides carboxyliques tels que le diacétate de dibutylétain, le dilaurate de dibutylétain, le maléate de dibutylétain, le diacétate de dilaurylétain, le diacétate de dioctylétain, le bis(4-méthylaminobenzoate) de dibutylétain, le bis (6-méthylaminocaproate) de dibutylétain, les hydroxydes de trialkylétain, les oxydes de dialkylétain, les dialcoxydes de dialkylétain et les dichlorures de dialkylétain.

Le catalyseur (d) est de préférence utilisé à raison de 0 à 1,5 % en poids du second composant.

Pour atteindre les objectifs de la présente invention, les caractéristiques attendues de la résine polyester-polyuréthane modifiée sont obtenues en mettant en présence le premier composant et le second composant en proportions telles que le rapport molaire des fonctions isocyanates aux fonctions hydroxyles du polyester polyol (a) et de l'(alk)acrylate hydroxylé (e) soit de 0,7 à 1,1, et de préférence entre 0,85 et 1,05. Cette règle correspond le plus souvent à un rapport en poids du second composant au premier composant allant de 1,5 à 3,0. On choisira un rapport NCO/OH d'autant plus élevé que la teneur en eau du polyester polyol (a) est plus élevée.

Par (alk)acrylate hydroxylé au sens de la présente invention, on entend un composé de formule générale :

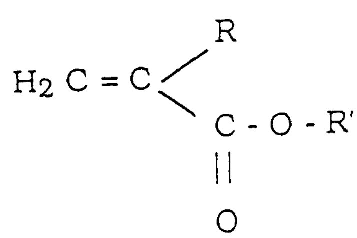

dans laquelle R est choisi parmi l'atome d'hydrogène et les radicaux alkyles ayant de préférence 1 à 4 atomes de carbone, et R' est un radical hydrocarboné, de préférence un radical alkyle, porteur d'au moins une fonction hydroxyle, située de préférence en extrémité de

chaîne. Comme exemples de tels composés utilisables dans la présente invention pour former le produit de réaction constituant la phase polymère durcissable, on peut citer notamment les acrylates, méthacrylates et éthylacrylates d'hydroxyalkyle comme les acrylates et méthacrylates de 2-hydroxyéthyle et de 2-hydroxypropyle, les esters acryliques ou méthacryliques partiels de composés di- ou polyhydroxylés comme le mono(méth) acrylate d'éthylène glycol, de propylène glycol-1,2 ou -1,3, de butylène glycol-1,4, d'hexaméthylèneglycol -1,6, de diéthylène glycol, de triéthylène glycol, de dipropylène glycol, de glycérol, de triméthylolpropane, de pentaérythritol.

L'(alk)acrylate hydroxylé (e) est de préférence présent dans le second composant en proportion telle que $\frac{(e)}{(a)+(e)}$ soit compris entre 5 % et 20 % en poids.

En règle générale, cette proportion sera choisie d'autant plus faible que la fonctionnalité du polyisocyanate (A) est plus faible, c'est-à-dire plus proche de 2.

Un second objet de la présente invention consiste en un matériau à renfort orienté préimprégné de résine et ayant une aptitude au formage, caractérisé en ce que la résine d'imprégnation est une résine polyester-polyuréthane modifiée telle que décrite en détail en tant que premier objet de l'invention. Le renfort orienté du matériau préimprégné formable selon l'invention peut être constitué de toute matière déjà utilisée conventionnellement dans la technologie des matériaux préimprégnés de résine synthétique, par exemple le verre minéral, le carbone ou certains polymères organiques tels que des polyamides. Il peut se présenter sous la forme de fibres ou de fils de longueur au moins égale à 25 mm environ, de tissu ou de mat. Lorsqu'il est constitué de verre minéral, le renfort orienté se présente de préférence sous forme d'un assemblage d'un grand nombre de filaments élémentaires réunis en fils par un agent collant (souvent dénommé agent d'ensimage), ces fils étant regroupés en faisceaux dénommés "rovings". La proportion de renfort orienté dans le matériau préimprégné formable selon l'invention est le plus souvent de 30 % à 85 % en poids et de préférence 50 % à 80 % en poids. Le matériau à renfort orienté préimprégné selon l'invention peut être avantageusement obtenu en mélangeant les deux composants de la résine polyester-polyuréthane modifiée, en proportions telles que le rapport molaire des fonctions NCO aux fonctions OH soit de 0,7 à 1,1, le mélange étant effectué à une température allant d'environ - 5°C à 40°C, en versant ce mélange dans un bac d'imprégnation dans lequel on fait tremper le renfort orienté pendant un temps suffisant pour permettre son imprégnation par la résine polyester-polyuréthane modifiée. A l'issue de ce temps, le matériau préimprégné à renfort orienté peut être enroulé afin d'être stocké sous forme de bobines. Le cas échéant le renfort orienté peut être, avant son passage dans le bain d'imprégnation, c'est-à-dire dans le bac d'imprégnation contenant la résine, revêtu d'un film protecteur tel qu'un film de papier siliconé ou de matière plastique sur l'une de ses faces et/ou après son passage dans le bain d'imprégnation, revêtu d'un tel film protecteur sur son autre face. Le trempage du renfort orienté dans le bain d'imprégnation peut s'effectuer soit de manière statique (procédé discontinu) soit, de préférence, de manière dynamique (procédé continu) en faisant défiler le renfort orienté selon une vitesse de passage d'environ 10 m/min. à environ 200 m/min. Ainsi, le temps moyen de trempage du renfort orienté dans le bain d'imprégnation est de préférence compris entre 1 et 30 seconde lorsque, comme indiqué précédemment, la viscosité de la résine polyester-polyuréthane modifiée ne dépasse pas 10 Pa.s à la température d'imprégnation, choisie de -5°C à 40°C. En raison de la durée de vie en pot ("pot life"), ou stabilité avant utilisation, de la résine polyester-polyuréthane modifiée selon l'invention, il est préférable que le trempage du renfort orienté dans ladite résine ait lieu au plus 90 minutes, et de préférence au plus 45 minutes après le mélange de ses deux composants. Au delà de cette durée en effet, il se produit généralement une évolution (augmentation) de la viscosité de la résine qui la rend impropre à un mouillage satisfaisant du renfort orienté à la température considérée.

Après le trempage dans le bain et, le cas échéant, l'application d'un film protecteur de papier siliconé ou de matière plastique sur l'une de ses faces, le matériau préimprégné selon l'invention est généralement trop collant et insuffisamment rigide pour être manipulé aisément. Pour pallier à cet inconvénient, il est nécessaire qu'au moins 80 % en moles des fonctions isocyanates présentes dans le premier composant (A) de la résine aient été converties par réaction avec les fonctions hydroxydes présentes dans le second composant de la résine. Pour cela il suffit de laisser stocker le matériau préimprégné selon l'invention, avant son utilisation dans un procédé de moulage, pendant au moins 1 heure, de préférence pendant au moins 6 heures, à une température de -5°C à 40°C, c'est-à-dire à une température qui peut être égale à la température d'imprégnation. C'est seulement dans le cas où une manipulation plus rapide du matériau préimprégné sera nécessaire que la conversion des fonctions isocyanates pourra être accélérée en stockant ledit matériau dans une étuve régulée à une température supérieure à la température ambiante, par exemple de l'ordre de 40°C. Un stockage plus prolongé du matériau préimprégné selon l'invention n'est nuisible ni à sa manipulabilité ni à ses propriétés mécaniques. Ainsi ce matériau préimprégné pourra être stocké sans inconvénient pendant une durée allant jusqu'à au moins 10 jours avant d'être utilisé dans un procédé de moulage.

Un autre objet de la présente invention consiste en un procédé de moulage du matériau préimprégné à renfort orienté formable décrit précédemment, le moulage étant effectué à une température de 80°C à 150°C pendant une durée de 30 secondes à 6 minutes. La durée du processus de moulage est en général d'autant plus courte que la température de moulage est plus élevée. La technique utilisée est le plus souvent le procédé de moulage par transfert de résine, utilisant une pression de 5 à 100 bars. Le moule utilisé peut être en métal ou en résine synthétique, selon la température et la pression du moulage choisies. Un agent démoulant de type connu en soi peut être appliqué sur le moule le cas échéant. Le matériau préimprégné à renfort orienté selon l'invention peut être soit moulé seul soit dans le contexte de la fabrication d'un produit composite à matériaux constitutifs différents comme dans le procédé décrit précédemment. En raison de son excellente adhésion sur des matériaux aussi variés que les métaux (acier, cuivre, aluminium) et les matières plastiques (polyéthylène, polypropylène, polyamides, polyuréthanes), il est particulièrement adapté à ce dernier contexte.

Les exemples ci-après sont fournis à titre illustratif et non limitatif de la présente invention.

EXEMPLE 1

Un premier composant de résine est d'abord constitué par mélange de 98 parties en poids de poly-4,4'-diphénylméthane diisocyanate de fonctionnalité égale à 2,2 commercialisé par la société DOW CHEMICAL sous la référence M309 et de 2 parties en poids de tert-butyl péroxy-2-éthylhexanoate commercialisé par la société AKZO sous la référence TRIGONOX 21S.

On prépare d'autre part un second composant de résine comprenant :

- 57 parties en poids d'un polyester polyol d'indice d'acide égal à 5 et d'indice d'alcool égal à 270, préparé à partir de 1 mole d'acide fumarique, 0,51 mole de propylène glycol, 0,51 mole de néopentylglycol et 0,68 mole de diéthylèneglycol,
- 30,7 parties en poids de styrène, et
- 12,3 parties en poids de méthacrylate d'hydroxyéthyle.

Un matériau préimprégné formable est ensuite obtenu en mélangeant les deux composants de résine ci-dessus, à la température de 20°C, en proportions telles que le rapport molaire des fonctions isocyanates présentes dans le premier composant aux fonctions hydroxyles présentes dans le second composant soit égal à 1,0 (c'est-à-dire avec un rapport en poids R du second composant au premier composant égal à 1,97) puis en versant ce mélange dans lequel on fait tremper, pendant 30 secondes et à la température de 20°C, un tissu de fibre de verre commercialisé par la société FLEMINGS sous la référence UD/UC-660, utilisé à raison de 65 parties en poids de fibre de verre pour 35 parties en poids de résine. Le mélange de résine, dont la durée de vie en pot ("pot life") ou stabilité avant utilisation est de 75 minutes à 25°C, ayant une viscosité de 0,8 Pa.s à la température choisie (20°C) on observe que l'imprégnation du tissu de verre s'effectue de manière satisfaisante. A la sortie du bain toutefois le matériau préimprégné est insuffisamment rigide et trop collant pour être manipulable. Il est donc nécessaire de le stocker pendant environ 6 heures à 23°C avant de pouvoir le manipuler. Une analyse par spectrométrie infrarouge montre que 80 % des fonctions isocyanates présentes à l'origine ont alors été converties par réaction avec les fonctions hydroxyles.

24 heures plus tard on moule le matériau préimprégné à renfort orienté ainsi obtenu dans un moule métallique, sous presse régulée à la température de 120°C, pendant 3 minutes et sous une pression de 100 bars. Sur le produit moulé ainsi obtenu on mesure les propriétés suivantes :

- TG : température de transition vitreuse déterminée par calorimétrie différentielle à balayage et exprimée en degrés Celsius,
- MT : module en traction selon la norme NFT 51034 et exprimé en MPa,
- CT : contrainte en traction selon la norme NFT 51034 et exprimé en MPa.

Les résultats des propriétés en traction mesurées à 23°C figurent dans le tableau I. Les propriétés en traction mesurées à -40°C sont les suivantes : MT = 22.500 MPa, CT = 438 MPa.

EXEMPLE 2

On répète le mode opératoire de l'exemple 1, aux exceptions suivantes près :

- le second composant est constitué de 64,6 parties en poids du même polyester polyol, de 21,5 parties en poids de styrène et de 13,9 parties en poids de méthacrylate d'hydroxyéthyle.
- le rapport en poids R du second composant au premier composant est égal à 1,93.

La résine obtenue par mélange possède une durée de vie en pot ("pot life") ou stabilité avant utilisation à 25°C, de 55 minutes. Elle est utilisée comme dans l'exemple 1. Les résultats des propriétés mesurées sur le produit moulé figurent dans le tableau I.

EXEMPLES 3 à 5

On répète le mode opératoire de l'exemple 1 en faisant varier la fonctionnalité du poly-4,4'-diphénylméthanediisocyanate et la proportion de méthacrylate d'hydroxyéthyle dans la résine tout en conservant constante (égale à 35 %) la proportion en poids de styrène par rapport à la somme du polyester polyol et du styrène. L'ajustement de la fonctionnalité est effectué en remplaçant le produit de référence M309 respectivement par :

- le produit de fonctionnalité 2,4 commercialisé par

DOW CHEMICAL sous la référence M304 (exemple 3),

- le produit de fonctionnalité 2,1 commercialisé par la société BAYER sous la référence HV20 (exemple 4),
- le produit de fonctionnalité 2,0 commercialisé par DOW CHEMICAL sous la référence M342 (exemple 5).

Pour tenir compte de ce changement de la fonctionnalité, le rapport en poids R du second composant au premier composant de la résine est ajusté de la manière indiquée dans le tableau I. Les résultats des propriétés mesurées sur le produit moulé comme dans l'exemple 1 sont rapportés dans le tableau I.

EXEMPLES 6 à 8

On répète le mode opératoire des exemples précédents tout en fixant le rapport molaire des fonctions isocyanates présentes dans le premier composant aux fonctions hydroxyles présentes dans le second composant à 0,9 (au lieu de 1,0). Pour tenir compte de ce changement, le rapport en poids R du second composant au premier composant de la résine est ajusté de la manière indiquée dans le tableau I. Les poly-4,4'-diphénylméthane diisocyanates utilisés sont :

- pour l'exemple 6 : la référence HV20 de l'exemple 4,
- pour l'exemple 7 : la référence M309 de l'exemple 1,
- pour l'exemple 8 : la référence M340 de fonctionnalité 2,1 commercialisée par DOW CHEMICAL.

Les résultats des propriétés mesurées sur le produit moulé comme dans l'exemple 1 sont rapportés dans le tableau I.

TABLEAU I

| Exemple | R | TG | MT | CT |
|---|---|---|---|---|
| 1 | 1,97 | 147 | 27 500 | 555 |
| 2 | 1,93 | 103 | 27 500 | 454 |
| 3 | 1,78 | 122 | 28 500 | 598 |
| 4 | 1,56 | 135 | 23 000 | 453 |
| 5 | 1,56 | n.d. | 24 500 | 494 |
| 6 | 1,81 | 135 | 24 800 | 390 |
| 7 | 2,20 | 109 | 28 500 | 530 |
| 8 | 1,85 | 104 | 26 700 | 608 |
| n.d. : non déterminé | | | | |

## Revendications

1. Résine polyester-polyuréthane modifiée formée par réaction, à une température comprise entre -5°C et 40°C :

- d'un premier composant comprenant :

  (A) au moins un polyisocyanate ayant une fonctionnalité de 2 à 3 et
  (B) un peroxyde ou un mélange de peroxydes capable d'initier une polymérisation par radicaux libres en proportion telle que : $\frac{(B)}{(A) + (B)}$ soit de 0,5 à 4 % en poids,

- avec un second composant comprenant :

  (a) au moins un polyester polyol préparé à partir d'au moins un diacide ou anhydride éthyléniquement insaturé et d'au moins un alcool polyhydrique, dans un rapport molaire alcool/acide compris entre 1,3 et 2,0, ce polyester polyol ayant un indice d'alcool compris entre 100 et 300, un indice d'acide ne dépassant pas 10 et une teneur en eau ne dépassant pas 2000 p.p.m.,
  (b) au moins un monomère éthyléniquement insaturé en proportion telle que $\frac{(b)}{(a) + (b)}$ soit compris entre 10 % et 50 % en poids,
  (c) au moins un promoteur de la décomposition du peroxyde initiateur à température ambiante (20°C), à raison de 0 à 4 % en poids du second composant,
  (d) au moins un catalyseur de la réaction isocyanate-alcool, à raison de 0 à 4 % en poids du second composant, et
  (e) au moins un (alk)acrylate hydroxylé en proportion telle que $\frac{(e)}{(a) \text{ et } (e)}$ soit compris entre 0,1 % et 35 % en poids,

- le rapport en moles des fonctions NCO dans le premier composant à la somme des fonctions OH des constituants (a) et (e) du second composant étant de 0,7 à 1,1,
- le monomère éthyléniquement insaturé (b) étant différent de l'(alk)acrylate hydroxylé(e),

cette résine étant caractérisée en ce que le rapport en poids, R, du second composant au premier composant est au plus égal à 2,20.

2. Résine polyester-polyuréthane modifiée selon la revendication 1, caractérisée en ce que sa température de transition vitreuse est de 100° à 160°C.

3. Matériau à renfort orienté préimprégné de résine et ayant une aptitude au formage, caractérisé en ce que la résine d'imprégnation est une résine polyester-polyuréthane modifiée selon l'une des revendications 1 et 2.

4. Matériau à renfort orienté selon la revendication 3, caractérisé en ce qu'au moins 80% en moles des

fonctions isocyanates présentes dans le premier composant de la résine ont été converties par réaction avec les fonctions hydroxyles présentes dans le second composant de la résine.

**5.** Matériau à renfort orienté selon l'une des revendications 3 et 4, caractérisé en ce qu'il comprend de 30 % à 85 % en poids de renfort orienté.

**6.** Procédé d'obtention d'un matériau à renfort orienté préimprégné de résine selon la revendication 3, caractérisé en ce que les deux composants de la résine sont mélangés en proportions telles que le rapport molaire des fonctions NCO aux fonctions OH soit de 0,7 à 1,1, le mélange étant effectué à une température allant de -5° à 40°C, en versant ce mélange dans un bac d'imprégnation dans lequel on fait tremper le renfort orienté pendant un temps compris entre 1 et 30 secondes.

**7.** Procédé selon la revendication précédente, caractérisé en ce que le trempage du renfort orienté dans la résine a lieu au plus 90 minutes après le mélange des deux composants de la résine.

**Claims**

**1.** Modified polyester-polyurethane resin formed by reaction, at a temperature of between -5°C and 40°C:

- of a first component comprising:

  (A) at least one polyisocyanate having a functionality of 2 to 3 and
  (B) a peroxide or a mixture of peroxides capable of initiating the polymerization by free radicals in a proportion such that: $\frac{(B)}{(A) + (B)}$ is from 0.5 to 4% by weight,

- with a second component comprising:

  (a) at least one polyesterpolyol prepared from at least one ethylenically unsaturated diacid or anhydride and from at least one polyhydric alcohol, in an alcohol/acid molar ratio of between 1.3 and 2.0, this polyesterpolyol having an alcohol number of between 100 and 300, an acid number not exceeding 10 and a water content not exceeding 2 000 ppm,
  (b) at least one ethylenically unsaturated monomer in a proportion such that $\frac{(b)}{(a) + (b)}$ is between 10% and 50% by weight,
  (c) at least one promoter of the decomposition of the initiating peroxide at ambient temperature (20°C), in a proportion of 0 to 4% by weight of the second component,
  (d) at least one catalyst of the isocyanate-alcohol reaction, in a proportion of 0 to 4% by weight of the second component, and
  (e) at least one hydroxylated (alk)acrylate in a proportion such that $\frac{(e)}{(a) \text{ and } (e)}$ is between 0.1% and 35% by weight,

- the ratio in moles of the NCO functional groups in the first component to the sum of the OH functional groups of the constituents (a) and (e) of the second component being from 0.7 to 1.1,
- the ethylenically unsaturated monomer (b) being other than the hydroxylated (alk)acrylate,

this resin being characterized in that the ratio by weight, R, of the second component to the first component is at most equal to 2.20.

**2.** Modified polyester-polyurethane resin according to Claim 1, characterized in that its glass transition temperature is from 100° to 160°C.

**3.** Material with oriented reinforcement preimpregnated with resin which is suitable for forming, characterized in that the impregnation resin is a modified polyester-polyurethane resin according to either of Claims 1 and 2.

**4.** Material with oriented reinforcement according to Claim 3, characterized in that at least 80 mol% of the isocyanate functional groups present in the first component of the resin have been converted by reaction with the hydroxyl functional groups present in the second component of the resin.

**5.** Material with oriented reinforcement according to either of Claims 3 and 4, characterized in that it comprises from 30% to 85% by weight of oriented reinforcement.

**6.** Process for producing a material with oriented reinforcement preimpregnated with resin according to Claim 3, characterized in that the two components of the resin are mixed in proportions such that the molar ratio of the NCO functional groups to the OH functional groups is from 0.7 to 1.1, the mixing being carried out at a temperature ranging from -5°C to 40°C, this mixture being poured into an impregnation tank in which the oriented reinforcement is dipped for a time of between 1 and 30 seconds.

**7.** Process according to the preceding claim, characterized in that the dipping of the oriented reinforcement in the resin takes place at most 90 minutes after the mixing of the two components of the resin.

## Patentansprüche

**1.** Modifiziertes Polyesterpolyurethanharz, das durch Umsetzung:

- einer ersten Komponente, enthaltend:

(A) mindestens ein Polyisocyanat mit einer Funktionalität von 2 bis 3 und

(B) ein Peroxid oder Peroxidgemisch, das zur Initiierung einer Polymerisation durch freie Radikale befähigt ist, in einem solchen Anteil, daß:

$\frac{(B)}{(A)+(B)}$ 0,5 bis 4 Gew.-% beträgt,

- mit einer zweiten Komponente, enthaltend:

(a) mindestens ein aus mindestens einer ethylenisch ungesättigten Disäure oder mindestens einem ethylenisch ungesättigten Anhydrid und mindestens einem mehrwertigen Alkohol in einem Alkohol/Säure-Molverhältnis zwischen 1,3 und 2,0 hergestelltes Polyesterpolyol mit einer Alkoholzahl zwischen 100 und 300, einer Säurezahl von höchstens 10 und einem Wassergehalt von höchstens 2000 ppm,

(b) mindestens ein ethylenisch ungesättigtes Monomer in einem solchen Anteil, daß $\frac{(b)}{(a)+(b)}$ zwischen 10 und 50 Gew.-% liegt,

(c) mindestens einen Promotor der Zersetzung des Peroxidinitiators bei Umgebungstemperatur (20°C), in einer Menge von 0 bis 4 Gew.-%, bezogen auf die zweite Komponente,

(d) mindestens einen Katalysator der Reaktion zwischen Isocyanat und Alkohol in einer Menge von 0 bis 4 Gew.-%, bezogen auf die zweite Komponente, und

(e) mindestens ein hydroxylgruppenhaltiges (Alk)acrylat in einem solchen Anteil, daß

$\frac{(e)}{(a)\text{ und }(e)}$ zwischen 0,1 und 35 Gew.-% liegt,

- wobei das Molverhältnis der NCO-Funktionen in der ersten Komponente zur Summe der OH-Funktionen der Bestandteile (a) und (e) der zweiten Komponente 0,7 bis 1,1 beträgt,

- wobei das ethylenisch ungesättigte Monomer (b) von dem hydroxylgruppenhaltigen (Alk) acrylat verschieden ist,

bei einer Temperatur zwischen -5°C und 40°C gebildet wird,

dadurch gekennzeichnet, daß das Gewichtsverhältnis R der zweiten Komponente zur ersten Komponente größer gleich 2,20 ist.

**2.** Modifiziertes Polyesterpolyurethanharz nach Anspruch 1, dadurch gekennzeichnet, daß es eine Glasübergangstemperatur von 100 bis 160°C aufweist.

**3.** Formbares, mit Harz vorimprägniertes Material mit orientierter Verstärkung, dadurch gekennzeichnet, daß es sich bei dem Imprägnierharz um ein modifiziertes Polyesterpolyurethan nach Anspruch 1 oder 2 handelt.

**4.** Material mit orientierter Verstärkung nach Anspruch 3, dadurch gekennzeichnet, daß mindestens 80 Mol-% der in der ersten Harzkomponente vorliegenden Isocyanatfunktionen durch Reaktion mit in der zweiten Harzkomponente vorliegenden Hydroxylgruppen umgewandelt worden sind.

**5.** Material mit orientierter Verstärkung nach Anspruch 3 oder 4, dadurch gekennzeichnet, daß es 30 bis 85 Gew.-% orientierte Verstärkung enthält.

**6.** Verfahren zur Herstellung eines mit Harz vorimprägnierten Materials mit orientierter Verstärkung nach Anspruch 3, dadurch gekennzeichnet, daß man die beiden Harzkomponenten bei einer Temperatur von -5°C bis 40°C in solchen Anteilen mischt, daß das Molverhältnis von NCO-Funktionen zu OH-Funktionen 0,7 bis 1,1 beträgt, indem man diese Mischung in ein Imprägnierbad gießt, in das man die orientierte Verstärkung für eine Dauer zwischen 1 und 30 Sekunden eintaucht.

**7.** Verfahren nach einem der vorhergehenden Ansprüche, bei dem das Eintauchen der orientierten Verstärkung in das Harz höchstens 90 Minuten nach dem Mischen der beiden Harzkomponenten erfolgt.